# EUROPEAN PATENT APPLICATION

(11) **EP 4 238 435 A1**
(43) Date of publication of application: **06.09.2023**
(21) Application number: 21885066.7
(22) Date of filing: 25.10.2021
(51) Int. Cl.: A24F 47/00, A24F 42/60, A24F 40/40, A24F 40/20, A24D 1/20, A24D 1/00

(54) **HEAT-NOT-BURN CARTRIDGE HAVING DUAL STRUCTURE**

(30) Priority: 30.10.2020 CN 202011185105; 28.01.2021 CN 202110121860
(71) Applicant: Yunnan Tobacco Biological Technology Co., Ltd., Yunnan 650220 (CN)
(72) Inventor: ZHOU, Jin, Kunming, Yunnan 650220 (CN); YANG, Zigang, Kunming, Yunnan 650220 (CN); YANG, Tao, Kunming, Yunnan 650220 (CN); HUANG, Liang, Kunming, Yunnan 650220 (CN); SHI, Qingzhen, Kunming, Yunnan 650220 (CN); LI, Jiahong, Kunming, Yunnan 650220 (CN)
(74) Representative: Zaboliene, Reda
(86) International application number: PCT/CN2021/125966
(87) International publication number: WO 2022/089339

(57) **Abstract**

A heat-not-burn cartridge having a dual structure. The cartridge is formed by allowing a smoke formation section (1) and a smoke constraint section (2) to sequentially join each other, wrapping with outer-layer wrapping paper (3), and twisting. According to the heat-not-burn cartridge, during the process of smoking, the smoke formation section (1) comes into contact with a heating element of a heater to release smoke that flows through the smoke constraint section (2), which has the effect of reducing the smoke temperature and guiding the smoke, such that the cooled high-concentration smoke is transferred to the oral cavity of a consumer, and has the advantages of high smoke formation quantity, low smoke temperature, etc. The heat-not-burn cartridge has a simple structure, is easy to industrialize, and has a good industrial application prospect.

## Description

The present application claims the priority to Chinese Patent Application No. 2020111851050, filed October 30, 2020, and the Chinese Patent Application No. 202110121860.0, filed on January 28, 2021.

### TECHNICAL FIELD

The present invention belongs to the technical field of tobacco processing. More specifically, the present invention relates to a heat-not-burn cartridge having a dual structure.

### BACKGROUND

The heat-not-burn product is a new type of product developed in recent years, and due to the fact that the external heat source is used for heating and baking to release the smoke, the harmful ingredient release amount of the product is remarkably reduced, and compared with traditional smoke tobacco, the safety of the product is remarkably improved. The heat-not-burn tobacco product has the characteristics and advantages of rich taste, no sidestream smoke, no soot pollution and the like, and has been accepted in the market, and good market feedback has been achieved. At present, on the market, the annual sales scale of products such as iQOS produced by Philip Morris International, Glo produced by British American Tobacco, Ploom produced by Japanese tobacco, lil produced by Korean tobacco, has exceeded 200 million boxes per year, occupying more than 3% of market share of foreign tobacco market.

However, due to the technical solution of releasing smoke by heating and baking, these products have experience defects of insufficient smoke concentration and high smoke temperature, which limit more consumers to select these heat-not-burn products. Although the heat-not-burn product usually adopts a multi-structure composite filter rod to regulate and control the concentration and temperature of the smoke, it cannot effectively solve the problem due to the technical problems of related material selection and structural design. At present, the total smoke particle phase per cigarette for the generally heat-not-burn product is not higher than 18mg, and the temperature of the smoke and the surface temperature of the filter tip are higher than 45°C. At the same time, the complex filter rod structure results in difficult manufacturing and high cost.

For example, US 20140305448 A1, titled "Aerosol-generating article for use with an aerosol-generating device" disclosed a heat-not-burn cartridge having a four-membered structure, which is a smoke formation section, a supporting section, a cooling section and a filtering section, respectively. The production process is complex, the cooling section can be melted in the suction process, thus affecting the smoking experience. It exist the defects of small smoke amount, high smoke temperature and the like;

CN 110680018 A, the titled "A support for an incense core and an incense core having the same", an embodiment disclosed a heat-not-burn cartridge structure of a ternary structure, which is a smoke formation section , a high-temperature-resistant smoke channel section and a filter section, respectively. The smoke cartridge production process is simplified, the smoke temperature is reduced to a certain extent, but the smoke amount of the filter section is lower, and the pain point with high smoke concentration is not solved.

CN 211153800 U, a utility model titled "A heat-not-burn cigarette and a smoking article" disclosed a heat-not-burn cigarette and a smoking article. The heat-not-burn cigarette comprises a matrix section, a smoke collection section circulation element and an external wrapping element, wherein the matrix section comprises an smoke formation section and a smoke passing section. When the smoke passes through the smoke passing section, a part of fragrance and smoke are adsorbed, so that the aroma release is influenced, and the smoke concentration is reduced; the smoke collection section is composed of one or more of an acetate fiber tube, a polylactic acid tube and a paper tube, and the cooling effect of the selected material of the smoke collection section in practical application is not obvious. As can be seen from the detection data of the embodiments of the present invention, it is not possible to specifically solve the contradiction between the amount of smoke and the concentration of smoke.

CN 210581038 U, a utility model titled"Composite smoke circulation rod, smoke circulation product and smoke circulation system" disclosed a heat-not-burn product having composite smoke circulation section, it is composed of a composite smoke circulation section and a smoke formation section, wherein the composite smoke section is two cylinders having through holes, they are made by cellulose acetate tow or polylactic acid tow material. From the effect of the embodiment, the smoke concentration has increased to a certain extent, but smoke temperature is above 42°C. It solved the problem of smoke concentration, but the problem of high smoke temperature has not been solved.

Therefore, with regard to technical defects in the prior art, the present inventors have completed the present invention by analyzing and summarizing the prior art and performing a large number of tests and analysis.

### SUMMARY OF THE INVENTION

An object of the present invention is to provide a heat-not-burn cartridge having a dual structure.

The present invention is achieved by the following technical solutions.

The present invention relates to a heat-not-burn cartridge having a dual structure.

The heat-not-burn cartridge is formed by allowing a smoke formation section and a smoke constraint section to sequentially join each other, wrapping with an outer-layer wrapping paper, and twisting. The heat-not-burn cartridge is cylindrical with a length of 30-90 mm and a diameter of 4-10 mm.

According to a preferred embodiment of the present invention, the length of the smoke formation section is 5-60 mm, and the length of the smoke constraint section is 25-80 mm.

According to another preferred embodiment of the present invention, the diameters of the smoke formation section and the smoke constraint section are the same, and their roundness is greater than 90%.

According to another preferred embodiment of the present invention, the smoke formation section is composed of a smoking material and a wrapping material layer wrapping the smoking material, wherein the smoking material is composed of tobacco or non-smoking materials, a smoking agent and a forming auxiliary agent according to a weight ratio of 50-80: 15-30: 0.1-10. The smoking material is a powder, a particle, a paste or a sheet-like smoking material; and the wrapping material layer is a tubular layer made of cellulose paper, a paper tube, a plastic tube or other materials.

According to another preferred embodiment of the present invention, the smoke constraint section is an injection molded parts or an extrusion parts having a parallel channel with the longitudinal axis of the smoke constraint section, and is directly connected with the smoke formation section and wrapped, or is wrapped by using a paper material or sleeved on the tubular layer, and then is connected with the smoke formation section and wrapped.

According to another preferred embodiment of the present invention, wherein in the cross section of the smoke constraint section, the ratio of the total area of the passage holes to the non-passage area is 0.3-2.0.

According to another preferred embodiment of the present invention, the cross-sectional shape of the smoke constraint section channel is circular, polygonal or irregular, and the number of the channels is greater than or equal to 1.

According to another preferred embodiment of the present invention, the distance between the wall of the smoke constraint section channel and the outer wall of the smoke constraint section is 0.1-3.0 mm.

According to another preferred embodiment of the present invention, the mass of the smoke constraint section per cigarette is 0.8-2.0 g.

According to another preferred embodiment of the present invention, the material for making the smoke constraint section is methyl silicone rubber, methyl vinyl silicone rubber, methyl vinyl phenyl silicone rubber, nitrile silicone rubber or fluorosilicone rubber food- grade silicone rubber material, the specific heat capacity of these materials is 1.5-2.5 KJ /(kg·°C), and the water content of these materials is 1.0-4.0% by weight.

The present invention will be described in more detail below.

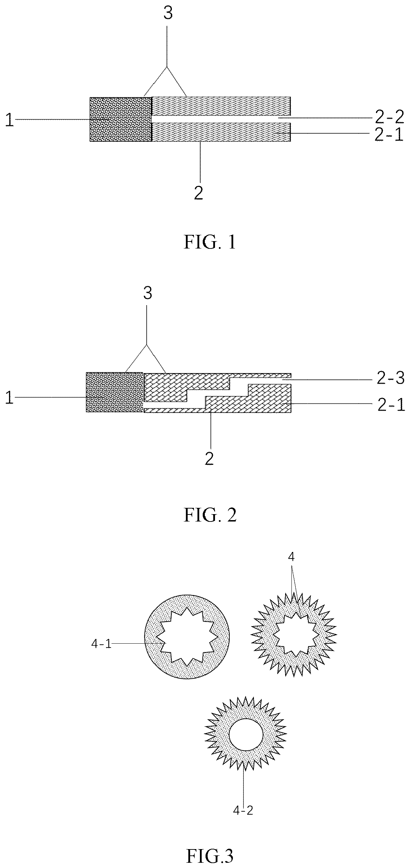

The present invention relates to a heat-not-burn cartridge having a dual structure. The specific structure of the heat-not-burn cartridge is shown in FIG. 1, where 1 is a smoke formation section, and 2 is a smoke constraint section; 2-1 is a channel wall; 2-2 is a channel; and 3 is wrapping paper.

The heat-not-burn cartridge is formed by allowing a smoke formation section and a smoke constraint section to sequentially join each other, wrapping with an outer-layer wrapping paper, and twisting, the heat-not-burn cartridge is cylindrical with a length of 30-90 mm and a diameter of 4-10 mm.

After the heat-not-burn cigarette is loaded into the smoking set, one end of the smoke formation section is in contact with the heating element of the smoking set heater, the other end of the smoke formation section is connected with one end of the smoke constraint section, and the other end of the smoke constraint section is used for smoking by a consumer. In the smoking process, the smoke formation section in contact with the heater heating element is heated to release smoke, and the smoke flows through the smoke constraint section, which plays a role in reducing the temperature of the smoke and guiding the smoke, and conveys the cooled high-concentration smoke into the oral cavity of the consumer.

According to the present invention, the length of the smoke formation section is 5-60 mm, and the length of the smoke constraint section is 25-80 mm.

The main function of the smoke formation section in the heat-not-burn cartridge of the present invention is to provide the consumer with the required amount of smoke and aroma substance during the smoking process, and therefore, the smoke formation section should accommodate 150-400 mg of the smoking material to ensure sufficient total smoking amount. If the length of the smoke formation section is less than 5 mm, the number of smoking materials is insufficient, resulting in insufficient smoke and aroma release. If the length of the smoke formation section is longer than 60 mm, the path of the smoke passing through the smoking material will be too long, the suction resistance will increase, and the smoke concentration will reduce, thereby affecting the suction effect. Preferably, the length of the smoke formation section is 12-50 mm, more preferably 18-40 mm.

The main effect of the smoke constraint section in the heat-not-burn cartridge of the present invention is that it has sufficient area for exchanging heat with the smoke and sufficient heat capacity, which can reduce the smoke temperature and guide the smoke for consumers suction. If the length of the smoke constraint section exceeds 80 mm, the path of the smoke passing through will be too long, so that the smoking amount of each suction will reduce. If the length of the smoke constraint section is less than 25 mm, the path of the smoke passing through will be too short, the cooling effect will be insufficient, and the smoke temperature is relatively high, thereby affecting the suction experience. Preferably, the length of the smoke constraint section is 26-68 mm, more preferably 30-60 mm.

In the present invention, the diameters of the smoke formation section and the smoke constraint section are the same, and their roundness is greater than 90%. In the present invention, the roundness should be understood as the ratio of the minimum diameter to the maximum diameter of the smoke formation section and the smoke constraint section, expressed in percentage. The higher the roundness, the better the aesthetic property of the formed smoke cartridge.

According to the present invention, the smoke formation section and the smoke constraint section are directly connected and wrapped, that is, one end of the smoke formation section is directly connected with one end of the smoke constraint section, and the heat-not-burn cartridge having the dual structure is obtained by wrapping and fixing the outer-layer wrapping paper.

Alternatively, the smoke constraint section is wrapped by a paper material or is sleeved on the tubular layer and then connected with the smoke formation section for wrapping, and then wrapped by the outer wrapping paper to obtain the heat-not-burn cartridge having the dual structure.

The paper material or tubular layer material used in the present invention should satisfy the requirements of no melting, no deformation, and no release of harmful ingredients at a temperature of 250°C, so as to ensure the safety of suction. The outer-layer wrapping paper or the tubular layer material comprises cellulose paper, aluminum foil composite paper, plastic film composite cellulose paper, sticker with back glue, plastic films and the like, which are products sold on the market at present, such as aluminum foil composite paper sold by Yunnan Endian Technology Industry Development Co. Ltd. under the trade name of aluminum foil paper., Plastic Film Composite Cellulose Paper Sold under the trade name of transparent forming paper by Shanghai Weixi Biotechnology Co. Ltd. under the trade name of transparent forming paper.

The smoke formation section and the smoke constraint section are described in detail below.

According to the present invention, the smoke formation section is composed of a smoking material and a wrapping material layer wrapping the smoking material, wherein the smoking material is composed of tobacco or non-tobacco materials, a smoking agent and a forming auxiliary agent in a weight ratio of 50-80: 15-30: 0.1-10.

In the present invention, the basic function of a tobacco or non-tobacco material in the smoking material is to provide a basic component of an aroma substance. The tobacco material used in the present invention is, for example, tobacco leaves, expanded tobacco stems, and minced tobacco, wherein the tobacco leaves are flue-cured tobacco, burley tobacco or airing cigarettes; the non-tobacco materials are, for example, tea leaves, mint leaves, folium artemisiae argyi, loquat leaves, cocoa, root of kudzu vine, liquorice or sugarcane plant powder. All these raw materials are raw materials commonly used in the art.

The basic effect of a smoking agent in the smoking material is to provide a basic component of smoke. The smoking agent used in the present invention is, for example, glycerin, propylene glycol, glyceryl diacetate or glyceryl triacetate. These smoking agents are commonly used in the art and are widely sold in the market at present, such as glycerol sold by Guangzhou Hongzhou Chemical Co. Ltd. under the trade name of glycerol.

The basic function of the forming auxiliary agent in the smoking material is to plastify the plant raw materials and other components into a desired form after mixing and drying. The forming auxiliary agent used in the present invention are, for example, guar gum, carboxymethyl cellulose, chitosan or carrageenan. These forming auxiliary agent are commonly used in the art and are widely sold in the market at present, such as carrageenan sold by Yiwu Yilong Biotechnology Co., Ltd. under the trade name of carrageenan.

In the present invention, when the amount of the smoking agent and the forming auxiliary agent is within the range, if the amount of tobacco or non-tobacco material is lower than 50, the smoke will be emptied when the tobacco or the non-tobacco material is sucked, the fragrance will be weak, and the original aroma characteristics of the plant cannot be restored, if the amount of tobacco or non-tobacco material is higher than 80, the smoking-material will have poor processing resistance and be easy to crush; therefore, the dosage of tobacco or non-tobacco material of 50-80 is reasonable, preferably 56-74, more preferably 60-70.

Similarly, when the amount of the tobacco or non-tobacco material and the forming auxiliary agent is within the range, if the amount of the smoking agent is lower than 15, the smoking amount will be little, thus affecting the smoking experience. If the amount of the smoking agent is higher than 30, the smoking material will be easy to absorb moisture, which is not conducive to the stability of the product quality. Therefore, the dosage of smoking agent of 15-30 is appropriate, preferably 18-26, more preferably 20-24.

When the amount of the tobacco or non-tobacco material and the smoking agent is within the range, if the dosage of the forming auxiliary agent is lower than 0.1, the smoking base material will have low tensile strength and will be not conducive to production and subsequent processing. If the dosage of the forming auxiliary agent is higher than 10, the peculiar smell will be heavy during smoking, thus affecting the suction experience. Therefore, the dosage of the forming auxiliary agent of 0.1-10 is suitable, preferably 0.3-7.0, more preferably 0.6-5.0. The smoking material is a powder, particle, paste or sheet-like smoking material, which is obtained by processing the raw materials in conformity to their proportions according to a tobacco processing technology well known to those skilled in the art, see CN 109393543 A, the invention titled "a superfine powder plant slice and a preparation method thereof ". CN 110876487 A, the invention titled "A method for preparing a smoke formation section of a granular heat-not-burn cigarette"; and CN 110652041 A, the invention titled "Heat-not-burn smoking generator, a preparation method therefor, a tobacco product, and a smoking body".

The wrapping material layer can effectively wrap and form the smoking material to meet the requirements of subsequent processing, the wrapping material layer is a wrapping layer made of cellulose paper, paper tubes, plastic tubes or other materials, and the materials are commonly used in the technical field and are widely sold in the market at present, such as cellulose paper sold by the Yunnan Endian technology industry development Co. Ltd. under the trade name of filter stick forming paper.

In the present invention, the smoke constraint section is an injection molded part or an extrusion part having a parallel channel with the longitudinal axis of the smoke constraint section, the channels are straight-through channels or continuous non-straight-through channels, such as a spiral shape, a folding channel etc. and the specific structure of the straight-through channel of smoke constraint section is shown in FIG. 1; see FIG. 2 for the specific structure of the continuous non-straight-through channel of smoke constraint section.

The present invention uses a food-grade silicone rubber material having a specific heat capacity of 1.5-2.5 KJ/(kg·°C) and water content of 1.0-4.0% by weight to form a smoke constraint section. When the smoke passes through the smoke constraint section, the high-temperature smoke exchanges heat with the food-grade silicone rubber material to consume a part of the smoke heat, and at the same time, the moisture of the food-grade silicone rubber material is heated and evaporated to consume a part of smoke heat, and in addition, the channel is long and these effects continue as the smoke moves forwards, so that the smoke temperature can be gradually reduced until the smoke is suitable for smoking of a consumer.

The specific heat capacity is the heat absorbed or released by a unit mass substance when it changes the unit temperature, which is a basic parameter of substance performance. The specific heat capacity of the smoke constraint section material of the present invention ensures that the smoke can fully absorb heat when passing through the smoke constraint section, and the inlet smoke temperature is suitable for people to suction. The specific heat capacity of the smoke constraint section material of the present invention is 1.5-2.5 KJ/ (kg·°C), and the water content is 1.0-4.0% by weight.

If the specific heat capacity of the smoke constraint section material is lower than 1.5 KJ/(kg·°C), the cooling effect will be not significant, thus affecting the smoking experience due to the scalding of the smoke. If the specific heat capacity of the smoke constraint section material is higher than 2.5 KJ/(kg·°C), the moisture in the smoke will be easily condensed into water beads, and the water beads enter the oral cavity by means of the smoke constraint section channel during suction, affecting the suction experience. Therefore, the specific heat capacity of the smoke constraint section material is 1.5-2.5 KJ/(kg . °C), preferably 1.8-2.3 kJ/(kg·°C), more preferably 1.9-2.2 KJ/(kg·°C);

Similarly, if the water content of the smoke constraint section material is lower than 1.0% by weight, the water content will be too low, and the cooling effect achieved by moisture evaporation will not be obvious. If the water content of the smoke constraint section material is higher than 4.0% by weight, the moisture of the smoke constraint section material will be too much, and the water which is not evaporated can diffuse to the smoke formation section, which is easy to cause mildew of the cigarette and affect the product quality. Thus, the water content of the smoke constraint section material is 1.0-4.0% by weight, preferably 1.4-3.6%, more preferably 1.8-3.0%.

The water content of the smoke constraint section material of the present invention is detected according to the detection method specified by GB/T 23357-2009 "Tobacco and Tobacco Products-Determination of Water Content-Karl Fischer Method".

The injection molding parts is obtained by processing methyl silicone rubber, methyl vinyl silicone rubber, methyl vinyl phenyl silicone rubber, nitrile silicone rubber or fluorosilicone rubber food-grade silicone rubber material according to CN 107639787 A, the invention titled "A process method for forming a silica gel layer by injection molding on the surface of a glass bottle".

The extrusion parts is obtained by processing methyl silicone rubber, methyl vinyl silicone rubber, methyl vinyl phenyl silicone rubber, nitrile silicone rubber or fluorosilicone rubber food-grade silicone rubber material according to CN 102642291 B, the invention titled "A preparation process of a large diameter silicone tube".

These food-grade silicone rubber materials are all products currently sold on the market, for example, methyl vinyl silicone rubber sold by Shenzhen Chuangyou silicone rubber science and technology Co. Ltd. under the trade name of 110 methyl vinyl silicone rubber, methyl vinyl phenyl silicone rubber sold by Anhui Aiyueta Silicone Oil Co. Ltd. under the trade name of IOTA120.

Of course, in addition to these food-grade silicone rubber materials, any other processable material that should meet the basic requirements described above, and without any negative effects on subsequent processing and use, can be used in the present invention, which are also within the protection scope of the present invention.

In the present invention, the cross-sectional shape of the smoke constraint section channel is circular, polygonal or irregular, and the number of the channels is greater than or equal to 1.

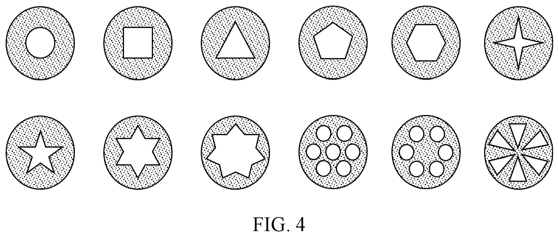

In the present disclosure, the polygon should be understood as a regular geometric pattern having three or more sides, such as a triangle, a pentagram, a gear shape, a rhombus, etc.. For example, the gear shape specifically refers to FIG. 3, and the other regular geometric figures refer to FIG. 4. The irregular shape should be understood as the shape of an irregular geometric pattern, such as an animal and plant pattern, a snowflake, a non-circular polygon, etc..

According to the present invention, the ratio of the total area of the channel holes to the non-channel area is 0.3-2.0 in the cross section of the smoke formation section. If the ratio of the total area of the channel holes to the non-channel area is less than 0.3, the total area of the channel holes will be small, the suction resistance in the suction process will be large, and the concentration of the smoke will be insufficient. If the ratio of the total area of the channel holes to the non-channel area is greater than 2.0, the total area of the channel holes will be too large, the flow rate of the smoke will be too high, and the smoke constraint section cannot give full play to the cooling effect, so that the temperature of the smoke and the lip temperature of the cigarette cartridge are too high, and the suction experience is affected.

According to the present invention, the distance between the channel wall of the smoke constraint section and the outer wall of the smoke constraint section thereof is 0.1-3.0 mm. Here, the term "distance" should be understood to be the shortest distance in a distance between the channel wall and its respective outer wall of the smoke constraint section on a channel. If the distance is less than 0.1 mm, the outer wall of the smoke constraint section will be easily heated by the smoke, and the temperature of the smoke constraint section will be too high and affect the suction experience. If the distance is greater than 3.0 mm, the inner diameter of the channel will be too small, the suction resistance of the cigarette cartridge will increase and the smoke amount will reduce, and the area of heat exchange with the smoke will also reduce, so that the heat exchange of the smoke will be influenced, the temperature of the smoke will be relatively high, thus influencing the smoking experience of people remarkably.

In the present invention, the mass of the smoke constraint section per cigarette is 0.8-2.0 g. If the mass is less than 0.8 g, the cooling of the smoke cannot be effectively achieved, and the suction effect will be affected. If the mass is higher than 2.0 g, the cigarette will be too heavy, affecting the production process and suction experience.

A method for determining the temperature and smoke concentration of each smoke is specifically described below.

According to GBT 19609-2004, "Cigarettes-Determination of total and nicotine-free dry particulate matter using a routine analytical smoking machine" and GB/T 16447-2004, "Tobacco and tobacco products-Atmosphere for conditioning and testing", use the smoke concentration detector produced by Dongguan Feihong instrument equipment Co. Ltd. for each suction test, and the smoke temperature and the smoke concentration are respectively measured.

Use the device to measure the smoke concentration index under the condition that the wavelength lambda of the laser light source is equal to 630 µm and the detection optical path is 4 cm.

Smoking procedure: selecting the MYUZ smoking set produced by the Dongguan Juwei Electronics Co. Ltd, the suction procedure being that the equipment enters the suction state after the heater completes the preheating, the suction capacity of per mouthful is 35 ml, the suction duration is 2s, the suction smoke flow rate is 17.5 ml/s, the suction interval is 13s, the puff number is 16, and the total suction operation duration is 240s.

Temperature measurement: measuring the mainstream smoke temperature and the lip temperature of the cartridge using a K-type thermocouple temperature detector.

Smoke concentration index measurement: the smoke concentration measured by the light transmission method is a non-contact measurement method. When the light beam from the light source passes through the aerosol medium, the light beam scatters and refracts on the spherical surface of the aerosol particle and the particle absorbs the light, so that the intensity of the transmitted light of the laser light beam penetrating through the aerosol smoke is attenuated, and when the concentration of the aerosol is larger, the more obvious the attenuation effect of the transmitted light is, and when the concentration of the aerosol is smaller, the weaker the attenuation effect of the transmitted light is. Under specific detection conditions, the ratio of the incident light intensity to the absorption light intensity is referred to as the extinction rate, and the determined extinction rate is the determined smoke concentration index, expressed in percentage.

The beneficial effects of the present invention are:
The heat-not-burn cartridge having the dual structure makes the smoke formation section contact with the heating element of the heater in the smoking process to release smoke, the smoke flows through the smoke constraint section, it has the effect of reducing the smoke temperature and guiding the smoke , and the cooled high-concentration smoke is conveyed to the oral cavity of the consumer. The heat-not-burn cartridge of the present invention has dual advantages of high smoke amount and low smoke temperature, and the consumer has greatly improved suction experience. The dual structure smoke cartridge has a simple structure, is easy to industrialize, and provides a new technical solution for the heat-not-burn cartridge structure.

### BRIEF DESCRIPTION OF THE DRAWINGS

FIG. 1 is a schematic cross-sectional view of a smoke constraint section having a straight-through passage of a heat-not-burn cartridge of the present invention.
FIG. 2 is a schematic cross-sectional view of a smoke constraint section having a continuous non-straight-through passage of a heat-not-burn cartridge of the present invention.
FIG. 3 is a schematic cross-sectional view of a smoke constraint section having a serrated channel of a heat-not-burn cartridge of the present invention.
FIG. 4 is a schematic cross-sectional view of smoke constraint section having a circular or polygonal channel of a heat-not-burn cartridge of the present invention.

In the drawings:
1: smoke formation section; 2: smoke constraint section; 2-1: channel wall; 2-2: straight-through channel; 2-3: non-straight-through channel; 3: wrapping paper; 4: groove; 4-1: inner groove; 4-2: outer groove.

### DETAILED DESCRIPTION OF THE EMBODIMENTS

The present invention will be better understood from the following examples.

Example 1: The heat-not-burn cartridge having a dual structure of present invention

The heat-not-burn cartridge having the dual structure of the present invention is formed by wrapping the smoke formation section 1 and the smoke constraint section 2 in sequence by the cellulosic paper sold by Yunnan Endian Technology Industry Development Co. Ltd. under the trade name filter stick forming paper as the outer-layer wrapping paper 3 and twisting. The diameters of the smoke formation section and the smoke constraint section are the same, and the roundness of the smoke formation section and the smoke constraint section is 90.2%; the heat-not-burn cartridge is cylindrical with a length of 45 mm and a diameter of 7 mm; the length of the smoke formation section is 12 mm, and the length of the smoke constraint section is 33 mm. wherein:
The smoke formation section is composed of a smoking material and a wrapping material layer wrapping the smoking material, wherein the smoking material is composed of flue-cured tobacco raw materials, a glycerol smoking agent and a guar gum forming aid in a weight ratio of 70: 20: 7.4; the smoking material is a powdery smoking material; the wrapping material layer is a tubular layer made of the cellulose paper.

The smoke constraint section is an injection molded part having a parallel channel with the longitudinal axis thereof, which is directly connected and wrapped with the smoke formation section; in the cross section of the smoke formation section , the ratio of the total area of the channel holes to the non-channel area is 0.9, the smoke constraint section channel have 2 parallel straight-through channels with circular cross section, the distance between the wall of the smoke constraint section channel and the outer wall of the smoke constraint section is 2.4 mm; the mass of the smoke constraint section per cigarette is 1.0g; and the smoke constraint section material is a methyl silicone rubber material with the specific heat capacity of 2.2 KJ/(kg·°C), and the moisture content of the smoke constraint section is 1.7% by weight according to the method described in the specification.

The method described in the description of the present application detects the mainstream smoke temperature, the lip end temperature, and the smoke concentration index of the heat-not-burn cartridge in this embodiment, and the detection results thereof are distributed in Table 1, Table 2 and Table 3.

At the same time, the temperature of mainstream smoke, the lip temperature and the smoke concentration index for the heat-not-burn HEETs original-flavor cartridge produced by the Philip Morris international as a control sample are also detected, and the detection results thereof is also respectively listed in Table 1, Table 2 and Table 3.

Example 2: The heat-not-burn cartridge having a dual structure of present invention

The heat-not-burn cartridge having the dual structure of the present invention is formed by sequentially connecting the smoke formation section 1 and the smoke constraint section 2 by the aluminum foil composite paper sold by Yunnan Endian Technology Industry Development Co. under the trade name of aluminum foil paper as the outer-layer wrapping paper 3 and twisting, the diameters of the smoke formation section and the smoke constraint section are the same, and the roundness of the smoke formation section and the smoke constraint section is greater than 90.6%. The heat-not-burn cartridge is cylindrical with a length of 74 mm and a diameter of 5 mm; the length of the smoke formation section is 20 mm, and the length of the smoke constraint section is 54 mm. wherein:
The smoke formation section is composed of a smoking material and a wrapping material layer wrapping the smoking material, wherein the smoking material is composed of a tea non-smoke plant raw material, a propylene glycol smoking agent and a carboxymethyl cellulose forming auxiliary agent according to a weight ratio of 80: 25: 5.5; the smoking material is a granular smoking material; the wrapping material layer is a tubular layer made of paper sold by Yutong Environmental Protection Technology (Suqian) Co. Ltd under the trade name of paper straw.

The smoke constraint section is an extrusion piece having a parallel channel with the longitudinal axis of the smoke constraint section, and the smoke constraint section is wrapped by a paper material and then is wrapped with the smoke formation section ; in the cross section of the smoke formation section , the ratio of the total area of the channel holes to the non-channel area is 0.3. the number of channels of the smoke constraint section is two, that is, a straight-through channel with a hexagonal cross section and a spiral channel with a circular cross section are sequentially distributed from outside to inside. The distance between the wall of the smoke constraint section channel and the outer wall of the smoke constraint section is 1.0 mm; the mass of the smoke constraint section per cigarette is 2.0 g; and the smoke constraint section material is a methyl vinyl silicone rubber material with a specific heat capacity of 1.5 KJ/(kg·°C), and the water content of the smoke constraint section is 2.1% by weight according to the method described in the specification.

Example 3: The heat-not-burn cartridge having a dual structure of the present invention.

The heat-not-burn cartridge having the dual structure of the present invention is formed by sequentially connecting the smoke formation section 1 and the smoke constraint section2 by wrapping the plastic thin-film composite cellulose paper sold by Shanghai Weixi Biotechnology Co. Ltd under the trade name of transparent forming paper as the outer-layer wrapping paper 3 and twisting. The diameters of the smoke formation section and the smoke constraint section are the same, and the roundness of the smoke formation section and the smoke constraint section is greater than 91.2%; the heat-not-burn cartridge is cylindrical with a length of 73 mm and a diameter of 6 mm; the length of the smoke formation section is 48 mm, and the length of the smoke constraint section is 25 mm. wherein:
The smoke formation section is composed of a smoking material and a wrapping material layer wrapping the smoking material, wherein the smoking material is composed of burley tobacco, an expanded tobacco stem tobacco raw material, a propylene glycol smoking agent and a chitosan forming auxiliary agent according to a weight ratio of 50: 15: 3.7; the smoking material is a pasty smoking material. The wrapping material layer is a tubular layer made of plastic sold by Dongguan Linghang Silicone Products Co., Ltd. under the trade name of silicone hose.

The smoke constraint section is an injection molded piece having a parallel channel with the longitudinal axis of the smoke constraint section, and the smoke constraint section is filled in the tubular layer and then is connected and wrapped with the smoke formation section. In the cross section of the smoke constraint section, the ratio of the total area of the channel holes to the non-channel area is 1.5. The smoke constraint section channels are two parallel straight-through channels with sawtooth cross-sectional edges (see FIG. 3). The distance between the wall of the smoke constraint section channel and the outer wall of the smoke constraint section is 3.0 mm; the mass of the smoke constraint section per cigarette is 1.3 g; the smoke constraint section material is a methyl vinyl phenyl silicone rubber material having a specific heat capacity of 1.8 KJ/(kg . °C), and the moisture content of the smoke constraint section is 2.4% by weight according to the method described in the description.

Example 4: The heat-not-burn cartridge having a dual structure of the present invention.

The heat-not-burn cartridge having the dual structure of the present invention is formed by sequentially connecting the smoke-formation section 1 and the smoke constraint section 2 by wrapping with the plastic film sold by Shanghai Weixi Biotechnology Co. Ltd under the trade name of transparent forming paper as the outer-layer wrapping paper 3 and twisting., and the diameters of the smoke-formation section and the smoke constraint section are the same, and the roundness of the smoke formation section and the smoke constraint section is greater than 92.8%. The heat-not-burn cartridge is cylindrical with a length of 55 mm and a diameter of 10 mm; the length of the smoke formation section is 5 mm, and the length of the smoke constraint section is 50 mm. wherein:
The smoke section is composed of a smoking material and a wrapping material layer wrapping the smoking material, wherein the smoking material is composed of an airing cigarette, an expanded tobacco stem tobacco raw material, a glycerol smoking agent and a carrageenan forming auxiliary agent according to a weight ratio of 60: 30: 1.8; the smoking material is a sheet-shaped smoking material; the wrapping material layer is a tubular layer made of cellulose paper sold by Yunnan Endian Technology Industry Development Co. Ltd under the trade name of filter stick forming paper.

The smoke constraint section is an extrusion parts having a parallel channel with its longitudinal axis, which is wrapped directly with the smoke formation section; the ratio of the total area of the channel holes to the non-channel area is 2.0 on the cross section of the smoke constraint section. The smoke constraint section channel is two parallel continuous folding channels, which cross-sectional shapes are circular. The distance between the wall of the smoke constraint section channel and the outer wall of the smoke constraint section is 1.6 mm. The mass of the smoke constraint section per cigarette is 1.8 g; and the smoke constraint section material is a fluorosilicone rubber food-grade silicone rubber material with a specific heat capacity of 2.5 KJ/(kg/·°C), and the water content of the smoke constraint section is 3.5% by weight according to the method described in the specification.

Example 5: The heat-not-burn cartridge having a dual structure of the present invention.

The heat-not-burn cartridge having the dual structure of the present invention is formed by sequentially connecting the smoke formation section 1 and the smoke constraint section 2 by wrapping with the aluminum foil composite paper sold by Yunnan Endian Technology Industry Development Co. Ltd. under the trade name aluminum foil paper as the outer-layer wrapping paper 3 and twisting, the diameters of the smoke formation section and the smoke constraint section are the same, and the roundness of the smoke formation section and the smoke constraint section is greater than 92.0%. The heat-not-burn cartridge is cylindrical with a length of 84 mm and a diameter of 4 mm; the length of the smoke formation section is 60 mm, and the length of the smoke constraint section is 24 mm, wherein:
The smoke formation section is composed of a smoking material and a wrapping material layer wrapping the smoking material, wherein the smoking material is composed of a mint leaf non-smoke plant raw material, a glycerol triacetate smoking agent and a chitosan forming auxiliary agent according to a weight ratio of 58: 18: 0.1; the smoking material is a granular smoking material; the wrapping material layer is a tubular layer made of paper sold by Yutong Environmental Protection Technology (Suqian) Co. Ltd. under the trade name of paper straw.

The smoke constraint section is an extrusion piece having a parallel channel with the longitudinal axis of the smoke constraint section, and the smoke constraint section is wrapped by a paper material and then is wrapped with the smoke formation section; in the cross section of the smoke formation section, the ratio of the total area of the channel holes to the non-channel area is 0.5. The number of the smoke constraint section channels is one, and the smoke constraint section channel is a spiral channel with a circular cross section. The distance between the wall of the smoke constraint section channel and the outer wall of the smoke constraint section is 0.1 mm; the mass of the smoke constraint section each cigarette is 0.8 g; and the smoke constraint section material is a methyl vinyl silicone rubber material having a specific heat capacity of 2.0 KJ/(kg . °C), and the water content of the smoke constraint section is 4.0% by weight according to the method described in the description.

Example 6: The heat-not-burn cartridge having a dual structure of present invention

The heat-not-burn cartridge having the dual structure of the present invention is formed by sequentially connecting the smoke-formation section 1 and the smoke constraint section 2 by wrapping with the plastic thin-film composite cellulose paper sold by Shanghai Weixi Biotechnology Co. Ltd under the trade name of transparent forming paper as the outer-layer wrapping paper 3 and twisting. The diameters of the smoke-formation section and the smoke constraint section are the same, and the roundness of the smoke-formation section and the smoke constraint section is greater than 92.5%. the heat-not-burn cartridge is cylindrical with a length of 90 mm and a diameter of 8 mm; the length of the smoke formation section is 34 mm, and the length of the smoke constraint section is 56 mm, wherein

The smoke formation section is composed of a smoking material and a wrapping material layer wrapping the smoking material, wherein the smoking material is composed of burley tobacco, an expanded tobacco stem tobacco raw material, a glyceride diacetate smoking agent and a carboxymethyl cellulose forming auxiliary agent according to a weight ratio of 68: 28: 10; the smoking material is a pasty smoking material. The wrapping material layer is a tubular layer made of plastic sold by Dongguan Linghang Silicone Products Co., Ltd. under the trade name of silicone tube.

The smoke constraint section is an injection molded piece having a parallel channel with the longitudinal axis of the smoke constraint section, and the smoke constraint section is filled in the tubular layer and then is connected and wrapped with the smoke formation section. On the cross section of the smoke constraint section, the ratio of the total area of the channel holes to the non-channel area is 1.8. The number of smoke constraint section channels is 3, namely, the straight channels with circular cross section are distributed from the outside to the inside, straight passage with regular quadrilateral cross section and spiral channels with circular cross section. The distance between the wall of the smoke constraint section channel and the outer wall of the smoke constraint section is 2.0 mm; the mass of the smoke constraint section per cigarette is 1.6 g; and the smoke constraint section material is the methyl vinyl phenyl silicone rubber material of a specific heat capacity of 2.8KJ/(kg·°C), the moisture content of which was 1.0% by weight according to the method described in the description.

Detects the mainstream smoke temperature, the lip end temperature, and the smoke concentration index of the heat-not-burn cartridge in Examples 1-6 according to the method described in the SUMMARY OF THE INVENTION, and the detection results thereof are distributed in Table 1, Table 2 and Table 3.

The results of Tables 1-3 clearly show that the temperature of the smoke of the heat-not-burn cartridge having the dual structure of the present invention is reduced by 5-12°C compared with the smoke temperature of the HEETS sample, the lip end temperature is reduced by 6-17°C, the highest smoke concentration differs by 24%, and the sample of Examples 1-6 is generally lower than the control sample at the smoke temperature, the lip temperature, and the smoke concentration index is high. The heat-not-burn cartridge having the dual structure of the present invention have dual characteristics of low smoke temperature and high smoke concentration.

**Table 1: The detection results of the mainstream smoke temperature of the heat-not-burn cartridge of the present invention, °C**

| Sample | suction | | | | | | | | | | | | | | | |
|---|---|---|---|---|---|---|---|---|---|---|---|---|---|---|---|---|
| | 1st | 2nd | 3rd | 4th | 5th | 6th | 7th | 8th | 9th | 10th | 11th | 12th | 13th | 14th | 15th | 16th |
| control | 48 | 53 | 53 | 53 | 52 | 52 | 52 | 51 | 50 | 49 | 48 | 47 | 44 | 45 | 44 | 42 |
| Example 1 | 36 | 42 | 42 | 43 | 43 | 42 | 41 | 41 | 40 | 40 | 40 | 39 | 39 | 38 | 37 | 35 |
| Example 2 | 36 | 43 | 43 | 43 | 42 | 42 | 42 | 42 | 41 | 41 | 40 | 40 | 39 | 39 | 36 | 35 |
| Example 3 | 33 | 42 | 41 | 42 | 42 | 43 | 43 | 43 | 42 | 41 | 40 | 39 | 38 | 37 | 36 | 34 |
| Example 4 | 36 | 41 | 42 | 42 | 43 | 43 | 42 | 42 | 42 | 42 | 41 | 40 | 38 | 37 | 36 | 35 |
| Example 5 | 35 | 43 | 42 | 42 | 41 | 42 | 40 | 41 | 41 | 40 | 40 | 39 | 39 | 38 | 37 | 35 |
| Example 6 | 36 | 42 | 42 | 42 | 42 | 42 | 41 | 41 | 41 | 40 | 39 | 39 | 39 | 38 | 36 | 35 |

**Table 2: The detection results of the lip end temperature of the heat-not-burn cartridge of the present invention, °C.**

| sample | suction | | | | | | | | | | | | | | | |
|---|---|---|---|---|---|---|---|---|---|---|---|---|---|---|---|---|
| | 1st | 2nd | 3rd | 4th | 5th | 6th | 7th | 8th | 9th | 10th | 11th | 12th | 13th | 14th | 15th | 16th |
| control | 38 | 39 | 41 | 44 | 46 | 47 | 48 | 48 | 48 | 48 | 48 | 47 | 46 | 45 | 45 | 45 |
| Example1 | 30 | 35 | 36 | 37 | 38 | 39 | 38 | 39 | 37 | 36 | 36 | 35 | 35 | 34 | 31 | 30 |
| Example2 | 31 | 33 | 34 | 35 | 35 | 35 | 33 | 34 | 33 | 32 | 32 | 32 | 31 | 31 | 30 | 29 |
| Example3 | 32 | 34 | 33 | 34 | 32 | 32 | 32 | 33 | 32 | 32 | 31 | 31 | 30 | 30 | 28 | 28 |
| Example4 | 31 | 33 | 34 | 33 | 33 | 32 | 31 | 32 | 32 | 33 | 33 | 33 | 31 | 30 | 29 | 29 |
| Example5 | 32 | 33 | 33 | 34 | 34 | 34 | 35 | 34 | 33 | 32 | 33 | 32 | 31 | 30 | 29 | 29 |
| Example6 | 31 | 32 | 33 | 33 | 33 | 33 | 34 | 33 | 33 | 32 | 32 | 31 | 31 | 30 | 29 | 28 |

**Table 3: The smoke concentration index detection results of the heat-not-burn smoke cartridge of the present invention, %.**

| Sample | suction | | | | | | | | | | | | | | | |
|---|---|---|---|---|---|---|---|---|---|---|---|---|---|---|---|---|
| | 1st | 2nd | 3rd | 4th | 5th | 6th | 7th | 8th | 9th | 10th | 11th | 12th | 13th | 14th | 15th | 16th |
| control | 28.4 | 35.0 | 42.2 | 49.1 | 54.5 | 58.0 | 58.0 | 58.1 | 59.2 | 60.1 | 61.5 | 62.5 | 65.8 | 67.3 | 47.5 | 43.2 |
| Example1 | 38.2 | 78.9 | 82.9 | 86.5 | 88.6 | 89.9 | 89.7 | 91.0 | 91.0 | 90.9 | 90.6 | 90.0 | 89.7 | 81.5 | 80.4 | 79.2 |
| Example2 | 31.8 | 61.8 | 72.6 | 79.0 | 79.7 | 80.8 | 82.3 | 84.3 | 85.8 | 88.2 | 82.1 | 84.9 | 82.6 | 81.0 | 79.8 | 77.6 |
| Example3 | 34.7 | 67.4 | 72.9 | 74.3 | 76.3 | 81.8 | 85.5 | 88.0 | 90.5 | 90.1 | 90.4 | 90.7 | 87.1 | 86.0 | 83.1 | 74.2 |
| Example4 | 38.4 | 65.8 | 73.5 | 79.8 | 83.0 | 87.1 | 88.2 | 89.7 | 90.9 | 91.3 | 91.1 | 91.0 | 91.3 | 89.9 | 85.6 | 83.2 |
| Example5 | 39.4 | 63.2 | 70.4 | 71.5 | 79.0 | 80.2 | 83.4 | 86.5 | 85.4 | 87.3 | 83.5 | 80.4 | 79.9 | 74.2 | 74.5 | 73.1 |
| Example6 | 36.4 | 65.7 | 73.2 | 75.6 | 80.3 | 83.9 | 85.8 | 89.0 | 91.7 | 90.5 | 87.4 | 85.6 | 82.3 | 82.1 | 79.4 | 76.8 |

## Claims

1. A heat-not-burn cartridge having a dual-structure, **characterized in that** the heat-not-burn cartridge is formed by allowing a smoke formation section and a smoke constraint section to sequentially join each other, wrapping with an outer-layer wrapping paper, and twisting, the heat-not-burn cartridge is cylindrical with a length of 30-90 mm and a diameter of 4-10 mm.

2. The heat-not-burn cartridge according to claim 1, wherein the length of the smoke formation section is 5-60 mm, and the length of the smoke constraint section is 25-80 mm.

3. The heat-not-burn cartridge according to claim 1, **characterized in that** the diameters of the smoke formation section and the smoke constraint section are the same, and their roundness is greater than 90%.

4. The heat-not-burn cartridge according to claim 1, wherein the smoke formation section is composed of a smoking material and a wrapping material layer wrapping the smoking material, wherein the smoking material is composed of tobacco or non-tobacco materials, a smoking agent and a forming auxiliary agent according to a weight ratio of 50-80: 15-30: 0.1-10; the smoking material is a powder, a particle, a paste or a sheet-like smoking material; and the wrapping material layer is a tubular layer made of cellulose paper, a paper tube, a plastic tube or other materials.

5. The heat-not-burn cartridge according to claim 1, wherein the smoke constraint section is an injection molded parts or an extrusion parts having a parallel channel with the longitudinal axis of the smoke constraint section, and is directly connected with the smoke formation section and wrapped, or is wrapped by using a paper material or sleeved on the tubular layer, and then is connected with the smoke formation section and wrapped.

6. The heat-not-burn cartridge according to claim 5, wherein in the cross section of the smoke constraint section, the ratio of the total area of the passage holes to the non-passage area is 0.3-2.0.

7. The heat-not-burn cartridge according to claim 5, wherein the cross-sectional shape of the smoke constraint section channel is circular, polygonal or irregular, and the number of the channels is greater than or equal to 1.

8. The heat-not-burn cartridge according to claim 5 or 7, wherein the distance between the wall of the smoke constraint section channel and the outer wall of the smoke constraint section is 0.1-3.0mm.

9. The heat-not-burn cartridge according to claim 5, wherein the mass of the smoke constraint section of per cigarette is 0.8-2.0g.

10. The heat-not-burn cartridge according to claim 5, wherein the material for making the smoke constraint section is methyl silicone rubber, methyl vinyl silicone rubber, methyl vinyl phenyl silicone rubber, nitrile silicone rubber or fluorosilicone rubber food grade silicone rubber material, the specific heat capacity of these materials is 1.5-2.5 KJ (kg·°C), and the water content of these materials is 1.0-4.0% by weight.
